# EUROPÄISCHE PATENTSCHRIFT

(11) **EP 1 313 601 B1**
(45) Veröffentlichungstag und Bekanntmachung des Hinweises auf die Patenterteilung: **16.05.2007**
(21) Anmeldenummer: 01960692.0
(22) Anmeldetag: 21.08.2001
(51) Int. Cl.: B29C 33/20, B29C 45/68, B29C 45/67

(54) **PLATTENSCHLIESSEINHEIT FÜR EINE SPRITZGIESSMASCHINE**
PLATEN CLAMPING MECHANISM FOR AN INJECTION-MOULDING MACHINE
PLATEAU PORTE-MOULE D'UNE PRESSE D'INJECTION

(30) Priorität: 21.08.2000 DE 10040819
(43) Veröffentlichungstag der Anmeldung: 28.05.2003
(73) Patentinhaber: Krauss-Maffei Kunststofftechnik GmbH, 80997 München (DE)
(72) Erfinder: WOHLRAB, Walter, 91781 Weissenburg (DE)
(74) Vertreter: Zollner, Richard
(86) Internationale Anmeldenummer: PCT/EP2001/009660
(87) Internationale Veröffentlichungsnummer: WO 2002/016105

(56) Entgegenhaltungen:
- EP-A- 0 824 058
- DE-A- 2 631 804
- DE-A- 4 243 735
- US-A- 3 669 599
- US-A- 5 135 385

## Beschreibung

Die Erfindung bezieht sich auf eine Plattenschließeinheit für eine Spritzgießmaschine der im Patentanspruch 1 angegebenen Art.

Derartige Plattenschließeinheiten sind allgemein bei Kunststoffspritzgießmaschinen oder bei Spritzgießmaschinen für thixotrope Metalle bekannt. Die bewegliche Formaufspannplatte und die feststehende Formaufspannplatte tragen jeweils eine Gießformhläfte. Die Plattenschfießeinheit hat erstens die Funktion, die beiden Formaufspannplatten gegeneinander zu verfahren und somit die Form zu öffnen bzw. zu schließen. Eine weitere Funktion liegt darin, eine hohe Schließkraft aufzubringen, um sicherzustellen, dass die Form auch bei sehr hohem Einspritzdrücken verschlossen bleibt und nicht auseinander klafft. Zwar könnte man daran denken, beide Funktionen in einer Antriebseinheit zusammen zufassen, was aber zu unterschiedlichen Anforderungen hinsichtlich der Konstruktion führt So kann das Verfahren der Platten mit relativ geringer Kraft durchgeführt werden, erfordert aber einen relativ großen Hub; das Verriegeln erfordert bei einer hohen Schließkraft einen relativ geringen Hub. Somit ist die Dimensionierung für einen einzelnen Antrieb, der beide Funktionen erfüllt, ungünstig.

Separate Einheiten wurden deshalb beispielsweise in der EP 0 544 903 B1 vorgeschlagen, bei der ein Spindelantrieb die Verfahrbewegung realisiert und Elektromagnete die Verschlusskraft sicherstellen; eine Kombination aus Kugelgewindespindel und Kniehebel zeigt die EP 0 383 935 A1; eine Anordnung aus Zahnstangen und Exzenter ist aus der DE 195 44 329 A1 bekannt.

Bei den bekannten Techniken sind für die Schließkrafteinheit aufwendige und wartungsintensive Mechaniken erforderlich bzw. können sehr hohe Schließkräfte nur bedingt erzeugt werden. Einen besonders kompakten Aufbau bieten die sogenannten 2-Platten-Schließeinheiten. Beim konventionellen Aufbau (3-Plattenaufbau) ist neben einer feststehenden Formaufspannplatte zusätzlich eine Stützplatte vorgesehen, wobei die bewegliche Formaufspannplatte zwischen der feststehenden Formaufspannplatte und der Stützplatte angeordnet ist und sich mechanisch an der Stützplatte abstützt. Beim 2-Plattenaufbau stützt sich die bewegliche Formaufspannplatte lediglich an der feststehenden Formaufspannplatte ab. Dies stellt zwar einen relativ kompakten Aufbau dar, macht es aber problematisch, eine Schließkrafteinheit anzubringen.

Aus der DE 26 31 804 ist eine Schließeinrichtung für Spritzgießmaschinen, insbesondere für Metalle und Kunststoffe bekannt, bei der in einem beweglichen Formträger mehrere Muttern drehbar angeordnet sind, die mit an Säulen angebrachten Gewinden in Wirkverbindung stehen. Die Säulen sind zur Erzeugung der Schließkraft in Längsrichtung verschiebbar und weisen an deren Enden Kolben auf. Durch Beaufschlagung der Kolben kann der Schließdruck aufgebracht werden.

Die DE-U-20016730 zeigt Kolben-Zylinder-Schließkrafteinheiten, die Verdrehsicherungen aufweisen und am Ende von Säulen angebracht sind. Nach dem Lösen der Verdrehsicherungen kann der Schließdruck kurzzeitig entlastet und somit eine Durchbiegung der Säulen vermieden werden.

Eine weitere Plattenschließeinheit ist aus der EP 0 381 107 B1 bekannt. Bei dieser bekannten Plattenschließeinheit ist an der beweglichen Formaufspannptatte im Bereich der Kugelspindel ein zusätzlicher Hydraulikantrieb zum Aufbringen einer hohen Schließkraft vorgesehen. Dieser Aufbau ist mechanisch jedoch sehr aufwendig und führt zu hohen Kosten bei der Umsetzung und kann zusätzliches Spiel bzw. Toleranzen in das System einbringen, so dass die für das genaue Betreiben der Plattenschließeinheit erforderliche Parallelität der Formaufspannplatte nicht immer gewährleistet werden kann.

Der Erfindung liegt die Aufgabe zugrunde, eine Platten-Schließeinheit zu schaffen, die sich durch einen einfachen und kompakten Aufbau auszeichnet und insbesondere auch als 2-Plattenschließeinheit ausgeführt sein kann, und bei der Maßnahmen zum Herstellen bzw. Beibehalten der Plattenparallelität getroffen sind.

Die Lösung dieser Aufgabe erfolgt durch eine Plattenschließeinheit mit den Merkmalen des Patentanspruchs 1; die weiteren Patentansprüche betreffen weitere Ausgestaltungen der Erfindung.

Bei der Kombination eines Elektroantriebs für das Verfahren der beweglichen Formaufspannplatte und einer Hydraulikvorrichtung für die Schließkrafteinheit können beide Funktionen, das heißt die Bewegung mit langem Verstellweg und geringer Kraft und das Aufbringen einer hohen Schließkraft bei geringem Verstellweg, gleichzeitig ohne großen mechanischen Aufwand erfüllt werden, wenn die Hydraulikvorrichtung in eine der Formaufspannpiatten integriert oder an ihr ausgebildet.

Bei diesem Aufbau ist ein Ende der Gewindespindel als Koben der Hydraulikkolbenzylindereinheit ausgebildet, wobei der Zylinder in einer der Formaufspannplatten ausgebildet ist. Dabei ist es vorgesehen, die Gewindespindel lösbar drehfest zu halten und die Verschiebung der Formaufspannplatte über eine Gewindemutter zu realisieren.

Bei dem Aufbau der Plattenschließeinheit ist der Kolben der Hydraulikvorrichtung an einem Ende der Gewindespindel ausgebildet, so dass zusätzliche, konstruktive Maßnahmen zur Integration der Hydraulikvorrichtung im Bereich des Gewindes der Gewindespindel entfallen und die Vorrichtung mit großer Genauigkeit hergestellt werden kann. Insgesamt ist es möglich, die Hydraulikvorrichtung in der festen Formaufspannplatte zu integrieren, was ebenfalls zur Verbesserung der mechanischen Genauigkeit und damit zur Erhöhung der Plattenparallelität beiträgt.

Erfindungsgemäß ist an der Gewindespindel eine lösbare Verdrehsicherung für die Gewindespindel vorgesehen. Sofern während des Betriebes eine Nichtparatielstellung der Formaufspannplatten festgestellt wird, kann dies dadurch korrigiert werden, dass eine oder mehrere Verdrehsicherungen der Spindeln gelöst werden, die Spindel oder die Spindeln zur Korrektur der Nichtparallelität verdreht werden und anschließend die Verdrehsicherung wieder arretiert wird.

Desweiteren wird erfindungsgemäß vorgeschlagen, den oder die Kolben mindestens während:des Verschiebens der beweglichen Aufspannplatte so mit Hydraulikflüssigkeit zu beaufschlagen, daß sie vorgespannt sind. Auf diese Weise werden .die Kolben durch das Hydraulikmittel immer in einer genau definierten Position während des Verschiebens gehalten, so daß auch durch diese Maßnahme eine erhöhte Plattenparallelität gewährleistet werden kann.

Eine Ausführungsform der Erfindung wird anhand der beigefügten Zeichnung erläutert.
- Fig. 1: zeigt eine erfindungsgemäße 2-Plattenschließeinheit in teilweise weggebrochener Seitendarstellung, und
- Fig. 2: zeigt schematisch ein Detail eines Kolbens mit einer Verdrehsicherung für die Spindel.

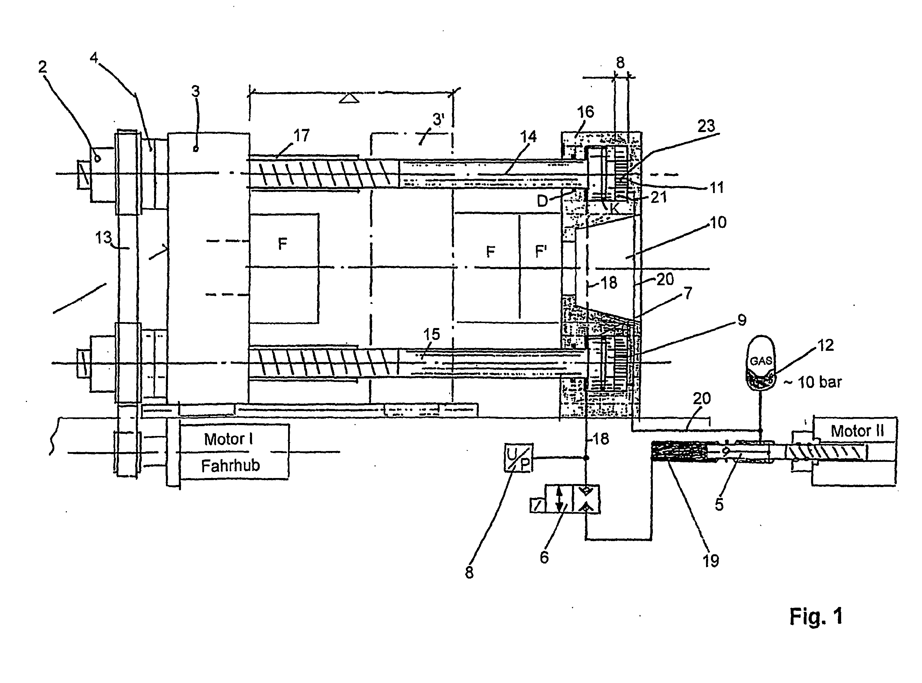

Die 2-Plattenschließeinheit gemäß Figur 1 umfaßt eine fest-stehende Formaufspannplatte 10 und eine bewegliche Formaufspannplatte 3. Die Formaufspannplatten 3, 10 sind über vier Gewindespindeln 14, 15 miteinander verbunden, wobei in der Darstellung nur zwei Gewindespindeln sichtbar sind. Die Gewindespindeln sind durch die bewegliche Formaufspannplatte geführt.

An der beweglichen Aufspannplatte 3 sind Spindelmuttern 2 drehbar montiert, die in Eingriff mit dem Gewindeabschnitt der Gewindespindeln stehen und über einen Zahnriemen 13 von einem Elektromotor I in Drehung versetzt werden können. Zwischen den Gewindespindeln 2 und der beweglichen Aufspannplatte 3 sind lösbare Zahnhaltebremsen 4 vorgesehen, die eine kraftschlüssige Verbindung zwischen der Formaufspannplatte und den Spindelmuttern 2 herstellen können..

An der feststehenden Aufspannplatte 10 sind die Enden der Gewindespindeln derart gelagert, daß sie im wesentlichen keine bzw. nur eine für einen Verriegelungshub erforderliche Axialbewegung durchführen können und im Normalbetrieb gegen Verdrehung gesichert sind.

In der Figur 1 sind schematisch zwei Formhälften F und F' dargestellt, die von der beweglichen Formaufspannplatte 3 bzw. der feststehenden Formaufspannplatte 10 getragen werden.

Zum Verschließen der Form wird die Zahnhaltebremse gelöst, der Motor I betreibt über den Zahnriemen 13 die Gewindemuttern 2 und verschiebt somit die bewegliche Formaufspannplatte 3 zum Verschließen der Form (nach rechts in der Figur) über den Fahrhub und dem Formhöhenausgleich Δ, bis die Formhälften F und F' aneinanderliegen und somit die Form verschlossen ist. Die Position der beweglichen Aufspannplatte 3 ist dabei mit gestrichelten Linien als 3' in der Figur dargestellt.

Die in der festen Formaufspannplatte gelagerten Enden der Gewindespindeln sind jeweils als Kolbenstangen ausgebildet, die Kolben 9 einer Hydraulikkolbenzylindereinheit tragen, wobei die Kolben in Zylindern geführt sind, die in der Formaufspannplatte ausgebildet sind. Zwischen der spindelseitigen Fläche des Kolbens 9 und der gegenüberliegenden Fläche des Zylinders ist ein Druckmittelraum 7 gebildet, der durch eine Dichtung D und einen Kolbenring K abgedichtet ist. Der Druckmittelraum 7 steht über geeignete Leitungen 18 und ein Ventil 6 in Verbindung mit einem Druckmittelzylinder 19, in den sich ein Verdrängungskolben 5 erstreckt. Der Verdrängungskolben kann durch einen Elektromotor II axial im Zylinder verschoben werden. Als Verdrängereinheit kann auch ein Mehrkolbensystem eingesetzt werden, z.B. Axial- oder Radialpumpen. Des weiteren ist ein Druckmittelreservoir (Niederdruckspeicher) 12 mit dem Druckmittelzylinder 19 verbunden, über das zusätzliches Druckmittel in den Zylinder eingebracht werden kann.

Ein Druckaufnehmer 8 ist in der Leitung zwischen dem Ventil 6 und dem Druckmittelraum 7 vorgesehen.

Das Werkzeug wird, wie oben beschrieben, durch die Betätigung des Motors I geschlossen, wobei sich bei der Bewegung die Kolben 9 am Boden der Druckmittelräume 7 (linke Seite in der Figur) abstützen.

Dieser Vorgang wird noch dadurch gefördert, daß der Sammelraum 21 über die Leitung 20 mit dem Niederdruckspeicher verbunden ist, in dem das Hydraulikmittel unter erhöhtem Druck von ca. 10 bar steht. Durch den Überdruck im Sammelraum 21 werden die Kolben zuverlässig gegen den Boden der Bohrung (links in Fig. 1) gepreßt und nehmen somit beim Verschieben der beweglichen Formaufspannplatte eine genau definierte Position ein, wodurch ein Verkippen der Platten gegeneinander verhindert wird.

Nachdem die Zahnhaltebremsen 4 geschlossen sind, wird das schaltbare Ventil 6 geöffnet, und der Verdrängerkolben 5 wird in den Druckmittelzylinder 19 bewegt, so daß das Druckmittel über die Leitungen 18 in die Druckmittelräume 7 gelangt und dort die Kolben 9 zum Aufbau einer erhöhten Schließkraft beaufschlagt und bewegt (nach rechts in der Figur), im dargestellten Beispiel gegen den Druck im Sammelraum 21. Wenn ein einstellbarer Enddruck erreicht ist, der über den Druckaufnehmer 8 überwacht wird, wird das Ventil 6 geschlossen, so daß die Schließkraft gehalten wird, und der Einspritz- bzw. Formvorgang wird gestartet. Nach Beendigung des Formens wird das Ventil 6 geöffnet, und der Verdrängerkolben 5 wird aus dem Zylinder 19 bewegt, so daß das Druckmittel zurück in den Zylinder 19 fließt. Eventuell während des Druckaufbaus über den Kolbenring ausfließendes Druckmittel gelangt in den Sammelraum 21 auf der dem Druckmittelraum gegenüberliegenden Seite des Kolbens und wird über die Leitung 20 zurück zum Reservoir geführt. Ein Durchlaß mit Rückschlagventil 22 im Verdrängerkolben 5 stellt sicher, daß eventuell ausgelecktes Druckmittel über das Reservoir vor dem nächsten Hub des Verdrängerkolbens 5 ergänzt wird.

In dem oben erwähnten Sammelraum 21 ist des weiteren eine Verdrehsicherung 23 für die Gewindespindel angeordnet.

Die erfindungsgemäß Plattenschließeinheit stellt mit einer einfachen und überschaubaren Technik eine kurze, platzsparende Bauweise sicher, und es besteht eine gute Zugänglichkeit für ein an der Außenseite der feststehenden Formaufspannplatte ansetzendes Einspritzaggregat. An der Außenseite der beweglichen Formaufspannplatte kann eine Auswerfeinheit zum Auswerfen des geformten Artikels angebracht werden.

Durch die hydraulische Arbeitsweise ergibt sich ein sehr steifes Schließsystem, mit dem auch Prägeformungen möglich sind.

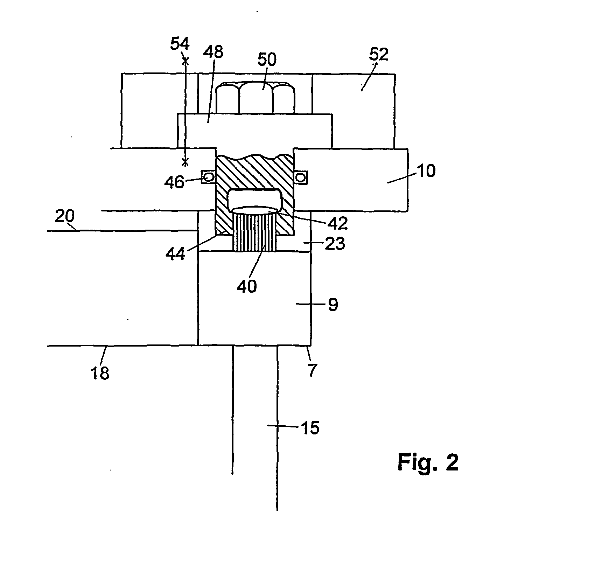

Fig. 2 zeigt in schematischer Seitenansicht eine lösbare Drehsicherung für die Gewindespindeln.

Gemäß Fig. 2 ist am Kolben 9, der mit der Gewindespindel 15 verbunden ist, starr ein Zahnzapfenelement 40 vorgesehen, an dessen Umfang sich längserstreckende Zähne ausgebildet sind. Das Zahnzapfenelement 40 steht in Eingriff mit einem Überwurfelement 44, das eine zum Zahnzapfenelement 40 komplementär ausgebildete Ausnehmung aufweist. Die Ausnehmung ist so dimensioniert, daß der Kolben mit dem Zahnzapfenelement 40 eine Axialbewegung entsprechend dem Schließkrafthub des Kolbens durchführen kann.

Das Überwurfelement 44 ist an dem der Ausnehmung 42 gegenüberliegenden Ende als Flansch 48 ausgebildet und erstreckt sich durch eine Öffnung in der festen Formaufspannplatte 10. Der Flansch 48 ist durch Klemmelemente 52, die ihrerseits durch Schrauben 54 oder dergleichen gesichert sein können, an der festen Aufspannplatte 10 befestigt. Starr mit dem Überwurfelement 44 ist ein Betätigungskopf 50 vorgesehen. Da in der dargestellten Ausführungsform das Überwurfelement 44 einen Teil des Sammelraums 23 begrenzt, ist das Überwurfelement vorzugsweise durch einen O-Ring oder dgl. abgedichtet.

Wird während des Betriebs der Plattenschließeinheit festgestellt, daß die Platten nicht mehr exakt parallel verlaufen bzw. eine gewisse Toleranz überschritten ist, so werden bei Bedarf bei einer oder mehreren Gewindespindeln die Klemm- oder Halteelemente 52, 54 gelöst, und durch Verdrehen des Betätigungskopfes 50 wird das Überwurfelement 44 verdreht, so daß über die Ausnehmung 42 und das Zahnzapfenelement der Kolben 9 zusammen mit der Gewindespindel 15 verdreht wird. Dabei ist die Spindelmutter gegen Verdrehung gesichert, so daß die Drehbewegung der Gewindespindel in eine lineare Verschiebung des damit verbundenen Teils der beweglichen Formaufspannplatte umgesetzt wird. Nachdem derart eine mögliche Schrägstellung der Platten korrigiert wurde, werden die Klemmelemente 52, 54 wieder gesichert, so daß die Gewindespindel 15 gegen weiteres Verdrehen gesichert ist.

Die Mechanik ist überlastsicher, da jede Spindel genau ein Viertel der Schließkraft trägt, zeichnet sich durch hohe Plattenparallelität aus und ermöglicht eine vertikale Bauweise.

Grundsätzlich läßt sich die Plattenschließeinheit auch als 3-Plattenschließeinheit auslegen. In diesem Fall ist die Platte 3 eine feststehende Stützplatte, und die Platte 16 ist als bewegliche Formaufspannplatte ausgelegt, die über die Spindeln von der Stützplatte gegen eine feste Formaufspannplatte bewegt wird (nach rechts in der Figur zum Schließen der Form).

Auch ist es grundsätzlich möglich, die Gewindemuttern drehfest zu halten und die Gewindespindeln zu verdrehen; allerdings dürfte die Bauweise hinsichtlich der Abdichtung der Druckmittelräume einen erhöhten Aufwand erfordern, so daß die dargestellte Ausführungsform vorteilhafter erscheint.

Auch ist es möglich, statt des Gewindespindelantriebs Zahnstangenantriebe einzusetzen, wobei die Zahnstangen in analoger Weise an einem Ende Hydraulikkolben tragen.

Die technische Dimensionierung der Plattenschließeinheit ist dem Fachmann grundsätzlich geläufig und wird hier nicht weiter im einzelnen erläutert. Rein beispielsweise kann etwa davon ausgegangen werden, daß der maximale Verriegelungshub δ für die Schließkrafteinheit etwa 5 mm beträgt.

## Patentansprüche

1. Plattenschließeinheit für eine Spritzgießmaschine mit einer beweglichen Formaufspannplatte (3) und einer festen Platte (10), einem Antrieb (I, 13) zum Verschieben der beweglichen Formaufspannplatte mit Bezug auf die feste Platte und einer Schließkrafteinheit (5, 19, 18, 7) zum Erzeugen einer hohen Schließkraft, wobei
- der Antrieb einen Elektromotor (I) und Gewindespindeln (14, 15) aufweist, die mit Spindelmuttern (2) zusammenwirken,
- die Schließkrafteinheit Hydraulik-Kolben-Zylinder-Einheiten (7, 9) aufweist, die in der festen oder in der beweglichen Formaufspannplatte integriert sind,
- die Gewindespindeln (14, 15) an einem Ende als Kolbenstangen, die die Kolben (9) der Hydraulik-Kolben-Zylinder-Einheit tragen, ausgebildet sind,
- eine lösbare Verdrehsicherung (23) vorgesehen ist, die an einem Ende des Kolbens (9) angreift,
- die Gewindespindeln (14, 15) derart aufgenommen sind, dass sie nach dem Lösen der Verdrehsicherung (23) über einen Betätigungskopf (50) verdrehbar sind und
- die Drehbewegung von einer oder mehreren Gewindespindeln in eine axiale Verschiebung des damit zusammenwirkenden Teils der beweglichen Formaufspannplatte (3) umsetzbar ist, um so eine Schrägstellung der Formaufspannplatte (3) zu korrigieren.

2. Plattenschließeinheit nach Anspruch 1, **dadurch gekennzeichnet, dass** die Gewindespindel (14,15) in der festen Formaufspannplatte in der lösbaren Verdrehsicherung (40-50) gelagert ist, der Gewindeabschnitt durch die bewegliche Formaufspannplatte geführt ist und sich durch eine an der Formaufspannplatte drehbar montierte Gewindemutter erstreckt, die von dem Elektromotor (I) angetrieben wird.

3. Plattenschließeinheit nach Anspruch 1 oder 2, **dadurch gekennzeichnet, dass** zwischen der Gewindemutter und der Formaufspannplatte eine lösbare Zahnhaltbremse (4) montiert ist.

4. Plattenschließeinheit nach Anspruch 3, **dadurch gekennzeichnet, dass** die Verdrehsicherung ein Zahnzapfenelement (40) am Kolben aufweist und ein Überwurfelement (44), das an der festen Formaufspannplatte (10) lösbar befestigt ist und eine komplementär zum Zahnzapfenelement ausgebildeten Ausnehmung (42) aufweist, wobei das Zahnzapfenelement (40) mindestens über den Kolbenhub der Schließkrafteinheit in der Ausnehmung verschiebbar ist.

5. Plattenschließeinheit nach einem der Ansprüche 1 bis 4, **dadurch gekennzeichnet, dass** eine Mehrzahl von Gewindespindeln vorgesehen ist.

## Claims

1. A platen clamping unit for an injection moulding machine comprising a movable mould clamping platen (3) and a fixed platen (10), a drive (1, 13) for displacing the movable mould clamping platen relative to the fixed platen and a clamping force unit (5, 19, 18, 7) for generating a high clamping force, wherein
- the drive comprises an electric motor (I) and threaded spindles (14, 15) which cooperate with threaded nuts (2),
- the clamping force unit comprises hydraulic piston- cylinder units (7, 9) which are integrated in the fixed or in the movable mould clamping platen,
- the threaded spindles (14, 15) are formed at one end as piston rods which support the pistons (9) of the hydraulic piston-cylinder unit,
- a releasable anti-rotation lock (23) is provided, which acts on one end of the piston (9),
- the threaded spindles (14, 15) are received in such a manner that after the anti-rotation lock (23) has been released, they can be turned by means of an actuating head (50) and
- the turning movement of one or more threaded spindles can be converted into an axial displacement of the part of the movable mould clamping platen (3) cooperating therewith to thus correct an oblique position of the mould clamping platen (3).

2. The platen clamping unit according to claim 1, **characterised in that** the threaded spindles (14, 15) are mounted in the fixed mould clamping platen in the releasable anti-rotation lock (40-50), the threaded section is guided through the movable mould clamping platen and extends through a threaded nut mounted rotatably on the mould clamping platen, which is driven by the electric motor (I).

3. The platen clamping unit according to claim 1 or 2, **characterised in that** a releasable toothed holding brake (4) is mounted between the threaded nut and the mould clamping plate.

4. The platen clamping unit according to claim 3, **characterised in that** the anti-rotation lock comprises a toothed pin element (40) on the piston and a cap element (44) which is detachably secured to the fixed mould clamping platen (10) and has a recess (42) formed as complementary to the toothed pin element, wherein the toothed pin element (40) is displaceable in the recess at least over the piston stroke of the clamping force unit.

5. The platen clamping unit according to any one of claims 1 to 4, **characterised in that** a plurality of threaded spindles is provided.

## Revendications

1. Dispositif de fermeture de plateaux pour une presse d'injection comportant un plateau de fixation du moule mobile(3) et un plateau fixe (10), un mécanisme d'entraînement (I, 13) servant à déplacer le plateau de fixation du moule mobile par rapport au plateau fixe, et un dispositif de force de serrage (5, 19, 18, 7) destiné à produire une force de serrage élevée,
le mécanisme d'entraînement présentant un moteur électrique (I) et des broches filetées (14, 15) qui co-agissent avec des écrous à broches (2),
le dispositif de force de serrage présentant des dispositifs à cylindres et à pistons hydrauliques (7, 9) qui sont intégrés dans le plateau de fixation du moule fixe ou mobile,
les broches filetées (14, 15) étant conçues sur une extrémité comme des tiges de piston, qui portent les pistons (9) du dispositif à cylindres et à pistons hydrauliques,
un système de sécurité contre les torsions (23) pouvant être déverrouillé étant prévu, lequel vient en prise avec une extrémité du piston (9),
les broches filetées (14, 15) étant logées de telle manière qu'elles peuvent être gauchies par le biais d'une tête d'actionnement (50) après le déverrouillage du système de sécurité (23) et
le mouvement de pivotement de l'une ou de plusieurs broches filetées pouvant être transformé en une translation axiale de la partie du plateau de fixation du moule (3) mobile co-agissant avec celles-ci afin de corriger ainsi une éventuelle inclinaison du plateau de fixation du moule (3).

2. Dispositif de fermeture de plateaux selon la revendication 1, **caractérisé en ce que** la broche filetée (14, 15) dans le plateau de fixation du moule est logée dans le dispositif de sécurité (40 - 50) pouvant être déverrouillé, **en ce que** la section filetée est guidée à travers le plateau de fixation du moule mobile pour atteindre un écrou fileté monté de manière à pouvoir tourner au niveau du plateau de fixation du moule, lequel écrou est entraîné par le moteur électrique (I).

3. Dispositif de fermeture de plateaux selon la revendication 1 ou 2, **caractérisé en ce qu'**un frein d'arrêt denté (4) pouvant être déverrouillé est monté entre l'écrou fileté et le plateau de fixation du moule.

4. Dispositif de fermeture de plateaux selon la revendication 3, **caractérisé en ce que** le dispositif de sécurité contre la torsion présente un tourillon denté (40) sur le piston et une clavette (44), qui est fixée de manière amovible au plateau de fixation du moule fixe (10) et qui présente un évidement (42) réalisé en complément du tourillon dentée, le tourillon denté (40) pouvant être déplacé dans l'évidement au moins par l'intermédiaire du coup de piston du dispositif de force de serrage.

5. Dispositif de fermeture de plateaux selon l'une quelconque des revendications 1 à 4, **caractérisé en ce qu'**une multitude de broches filetées sont prévues.
